(19) Europäisches Patentamt
European Patent Office
Office européen des brevets

(11) **EP 3 034 984 B1**

(12) **EUROPÄISCHE PATENTSCHRIFT**

(45) Veröffentlichungstag und Bekanntmachung des Hinweises auf die Patenterteilung:
**15.04.2020 Patentblatt 2020/16**

(51) Int Cl.:
*F41G 3/08* (2006.01)     *F41H 13/00* (2006.01)
*F41G 3/14* (2006.01)     *G01S 17/66* (2006.01)
*G01S 17/89* (2020.01)     *G01S 17/95* (2006.01)

(21) Anmeldenummer: **15003426.2**

(22) Anmeldetag: **02.12.2015**

(54) **VERFAHREN UND VORRICHTUNG ZUR LOKALEN STABILISIERUNG EINES STRAHLUNGSFLECKS AUF EINEM ENTFERNTEN ZIELOBJEKT**

METHOD AND DEVICE FOR LOCALLY STABILIZING A RADIATION SPOT ON A REMOTE TARGET OBJECT

PROCEDE ET DISPOSITIF DE STABILISATION LOCALE D'UNE TACHE DE RAYONNEMENT SUR UN OBJET CIBLE ELOIGNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2014 DE 102014018802**
**08.08.2015 DE 102015010276**

(43) Veröffentlichungstag der Anmeldung:
**22.06.2016 Patentblatt 2016/25**

(73) Patentinhaber: **MBDA Deutschland GmbH**
**86529 Schrobenhausen (DE)**

(72) Erfinder:
• **KEFFERPÜTZ, Klaus**
**85298 Scheyern (DE)**
• **KALENDER, Carolyn**
**85254 Sulzemoos (DE)**
• **ZOZ, Jürgen**
**86316 Friedberg (DE)**

(74) Vertreter: **Isarpatent et al**
**Patent- und Rechtsanwälte Behnisch Barth Charles**
**Hassa Peckmann & Partner mbB**
**Postfach 44 01 51**
**80750 München (DE)**

(56) Entgegenhaltungen:
**US-A1- 2009 097 508     US-A1- 2010 282 942**
**US-A1- 2011 103 410     US-A1- 2012 292 481**
**US-B1- 7 405 834**

• **FITZPATRICK B ET AL: "Bayesian statistical approaches to tracking through turbulence", AMERICAN CONTROL CONFERENCE, 2004. PROCEEDINGS OF THE 2004 BOSTON, MA, USA JUNE 30-JULY 2, 2004, PISCATAWAY, NJ, USA,IEEE, 30. Juni 2004 (2004-06-30), Seite 1499, XP031989674, ISBN: 978-0-7803-8335-7**

**Beschreibung**

TECHNISCHES GEBIET

Die vorliegende Erfindung betrifft ein Verfahren zur lokalen Stabilisierung eines Strahlungsflecks auf einem entfernten Zielobjekt. Sie betrifft weiterhin eine Vorrichtung zur lokalen Stabilisierung eines Strahlungsflecks auf einem entfernten Zielobjekt gemäß einem solchen Verfahren. Dabei wird ein Hochenergielaserstrahl von einem Hochenergiestrahler ausgesendet und auf das entfernt gelegene oder sich in großer Entfernung bewegende Zielobjekt gerichtet, auf welchem er den Strahlungsfleck erzeugt. Ziel ist die Zerstörung oder Beschädigung des Zielobjekts mittels des Hochenergielaserstrahls.

HINTERGRUND DER ERFINDUNG

Die Ausbreitung von Hochenergielaserstrahlen in der Atmosphäre unterliegt turbulenten Störungen, die durch Temperaturschwankungen und damit leichten Schwankungen des Brechungsindex der Luft hervorgerufen werden und zeitlich variieren. Diese Störungen resultieren in einer örtlichen Ablenkung des Hochenergielaserstrahls (der sogenannte Tip/Tilt Anteil) sowie einer zusätzlichen nichtlinearen Veränderung des Strahlprofils. Die Wirkung des Hochenergielaserstrahls auf dem Ziel wird verschlechtert, wenn der Strahlungsfleck nicht konstant an derselben Stelle des Zielobjekts verbleibt (auch wenn dieses sich bewegt), sondern wenn er auf dem Zielobjekt wandert. Soll die Leistung des Hochenergielasers (HEL) auf dem Zielobjekt maximiert werden, so ist es erforderlich, die turbulenten Störungen zu kennen und zu kompensieren. Dazu ist zunächst das Zielobjekt zu beobachten, wozu üblicherweise eine Bilderfassungseinrichtung vorgesehen ist, die vom Zielobjekt ausgesandtes oder reflektiertes Licht erfasst.

Bei ausgedehnten Zielen führen folgende Effekte zu einer Beeinträchtigung des von der Bilderfassung aufgenommenen Zielobjektbildes und somit zu einer möglichen Verschlechterung der Stabilisierung des Strahlungsflecks auf dem Zielobjekt:

- Inhomogene zeitliche Variation der von der Bilderfassungseinrichtung beobachteten Oberflächenhelligkeit des Zielobjekts, z.B. wandernde Glints, inhomogene Beleuchtung, Abschattungen, Turbulenzeffekte etc.;
- Bei Beleuchtung des Zieles mit einem Beleuchtungslaser können zusätzliche Speckle-Effekte und Inhomogenitäten der Oberflächenhelligkeit auftreten;
- Starke Verschmierungen der Zielkonturen, z.B. durch Turbulenzen, inhomogene Beleuchtungssituationen des Zieles oder Speckle-Effekte.

Des Weiteren unterliegt die Turbulenz in der Luft, die der Hochenergielaserstrahl auf seinem Weg zum Ziel durchdringt, örtlichen Schwankungen, es ist daher für die Beobachtbarkeit der Turbulenz erforderlich diese innerhalb begrenzter Gebiete um den Hochenergielaserstrahl herum zu detektieren. Typischerweise werden zur Beurteilung der lokal geeigneten Gebiete der Friedparameter $r_0$ bzw. der isoplanatische Winkel $\Theta_0$ herangezogen. Sie beschreiben Orts- bzw. Winkelbereiche, außerhalb derer man von einer signifikant veränderten Turbulenz sprechen kann.

STAND DER TECHNIK

Es sind herkömmliche Konzepte zur Detektion der Turbulenz bekannt, so zum Beispiel bei der Detektion des Tip-Tilt-Anteils die Verwendung von Guidestars in der Astronomie oder von Tip-Tilt-Laserspots in Zusammenhang mit Hochenergielasern. Zur Detektion von höheren Moden der Turbulenz finden so genannte adaptive Optiken Anwendung. Die Vorrichtungen zur Turbulenzdetektion nach diesen bekannten Verfahren benötigen jeweils zusätzliche Sensoren und/oder Sender.

Weiter ist aus der US 7 405 834 B1 ein Bildgebungsverfahren bekannt. Das Auslenken eines Hochenergielaserstrahls ist aus der Druckschrift US 2010/282942 A1 bekannt. Statistische Ansätze zur Korrektur von Turbulenzen offenbaren Fitzpatrick et al., "Bayesian statistical approaches to tracking through turbulence", American Control Conference, 2004. Weiteren Stand der Technik bilden die Dokumente US 2012/292481 A1, US 2009/097508 A1 und US 2011/103410 A1.

Im Bereich der Bildverarbeitung sind verbreitete Verfahren die Schwerpunktsmessung der Abbildung des Zielobjekts im von der

Bilderfassungseinrichtung erfassten Bild oder alternativ durch Auswertung eines Vier-Quadranten-Detektors.

Der Nachteil dabei ist, dass die zeitlichen Variationen der Oberflächenhelligkeit als virtuelle turbulente Tip/Tilt-Bewegung interpretiert werden und ein zusätzliches Rauschen erzeugen, welches die Stabilisierung des Strahlungsflecks auf dem Zielobjekt deutlich verschlechtert. Auch Bildverschmierungen führen zu einem zusätzlichen Rauschen.

Alternative Methoden, zum Beispiel Korrelationsverfahren, sind ebenfalls sensibel gegen starke Schwankungen der Oberflächenhelligkeit. Konturtrackingverfahren sind weniger sensitiv gegenüber Helligkeitsschwankungen der Zieloberfläche, erzeugen aber bei Konturverschmierungen des Zieles im von der Bilderfassungseinrichtung erfassten Bild deutliches Zusatzrauschen. In der Literatur veröffentlichte statistische Verfahren versuchen, die turbulente Bildverschlechterung zu schätzen, lösen aber das Problem der zeitlichen Variation der Oberflächenhelligkeit nicht.

Auf der Regelungsseite sind Ansätze gebräuchlich, bei welchen das Ergebnis der Bildverarbeitung Eingangsdaten für ein Filter sind, welches in Reihe mit dem Regler geschaltet ist, das heißt, dass die Schätzgrößen des Filters den Eingang der Regeleinrichtung bilden. Dieser Ansatz wird vor allem dann verfolgt, wenn das Bildverarbeitungsergebnis verrauscht ist, zum Beispiel beim Einsatz gradientenbasierter Bildverarbeitungsverfahren. Nachteilig bei dieser Vorgehensweise ist, dass das Filter auch höherfrequente Störanteile eliminiert, wie sie ebenfalls aus Turbulenzeffekten insbesondere bei bewegten Zielen resultieren.

## DARSTELLUNG DER ERFINDUNG

Aufgabe der vorliegenden Erfindung ist es daher, ein Verfahren und eine Vorrichtung zur Stabilisierung eines Strahlungsflecks auf einem entfernten Zielobjekt anzugeben, so dass eine schnelle Zerstörung des Zielobjekts mittels Hochenergielaserstrahlen ermöglicht ist.

Der auf das Verfahren gerichtete Teil der Aufgabe wird gelöst durch das Verfahren zur Stabilisierung eines Strahlungsflecks auf einem entfernten Zielobjekt mit den Merkmalen des Anspruchs 1.

Dieses erfindungsgemäße Verfahren zur lokalen Stabilisierung eines Strahlungsflecks auf einem entfernten Zielobjekt, bei welchem der Strahlungsfleck von einem Hochenergielaserstrahl gebildet wird, der von einem Hochenergiestrahler auf das Zielobjekt gerichtet wird, und bei welchem das Zielobjekt von einem Beleuchtungsstrahl beleuchtet wird, der von einer Beleuchtungseinrichtung auf das Zielobjekt gerichtet wird, zeichnet sich dadurch aus, dass eine von dem vom Beleuchtungsstrahl beleuchteten Zielobjekt reflektierte Strahlung von einer Bilderfassungseinrichtung empfangen wird, dass die vom Zielobjekt zur Bilderfassungseinrichtung reflektierte Strahlung durch denselben optischen Pfad läuft wie der Hochenergielaserstrahl, dass das von der Bilderfassungseinrichtung erfasste Bild des beleuchteten Zielobjekts oder eines Teils des Zielobjekts analysiert und mit zumindest einem zu einem zurückliegenden Zeitpunkt erzeugten Bild des beleuchteten Zielobjekts oder eines Teils des Zielobjekts oder mit einem in einer Objektdatenbank gespeicherten Bild verglichen wird und dass ausgehend von diesem Vergleich ein Korrektursignal bestimmt wird, mit dem eine in dem vom Hochenergielaserstrahl und von der reflektierten Strahlung gemeinsam durchlaufenden optischen Pfad angeordnete optische Korrektureinrichtung beaufschlagt wird. Das Ergebnis des in der Bildverarbeitungseinrichtung durchgeführten Vergleichs wird dann einer Filtereinrichtung und parallel dazu einem Feintracking-Regler zugeführt. Von der Filtereinrichtung wird daraufhin ein Filter-Korrektursignal erzeugt und vom Feintracking-Regler wird ein Regler-Korrektursignal erzeugt. Aus dem Filter-Korrektursignal und dem Regler-Korrektursignal wird dann das Korrektursignal gebildet.

Die Regeleinrichtung wird gebildet von einem Feintracking-Regler und einem Filter. Regler und Filter berechnen somit jeweils ein Korrektursignal, welches aufsummiert zur Ansteuerung der Korrektureinrichtung verwendet wird.

Unter Verwendung eines Bewegungsmodells für den Strahlungsfleck (Hochenergielaserspot) auf dem Zielobjekt und der Ergebnisse aus der Bildverarbeitung (zum Beispiel Warping-Parameter, Ablage des Strahlungsflecks vom Haltepunkt, Zeitstempel) prädiziert das Filter die Ablage des Strahlungsflecks vom Haltepunkt im nächsten Zeitschritt und berechnet ein Korrektursignal (Filter-Korrektursignal). Auf diese Weise können niederfrequente Störanteile bereits vom Filter kompensiert und Schleppfehler minimiert werden. Die im Bewegungsmodell berücksichtigte Bewegung setzt sich dabei zusammen aus Anteilen einer Zielbewegung und Turbulenzeinflüssen.

Neben Informationen aus der Bildverarbeitung können auch Messungen eines Radars und/oder der Grobtracking-Bildverarbeitung im Filter als zusätzliche Messungen berücksichtigt werden.

Der Feintracking Regler nutzt ebenfalls das Ergebnis der Bildverarbeitung (zum Beispiel Warping-Parameter, Ablage des Strahlungsflecks vom Haltepunkt, Zeitstempel) um die verbleibenden Restfehler (höherfrequente Störanteile, Abweichung der wahren Strahlungsfleck-Bewegung vom Bewegungsmodell im Filter) zu kompensieren. Der Aufruf des Reglers erfolgt im selben Takt wie der Aufruf der Bildverarbeitung. Für das Filter kann es vorteilhaft sein, wenn es häufiger aufgerufen wird.

Das in einer Objektdatenbank gespeicherte Bild kann auch ein synthetisches Bild oder ein auf bestimmte Bildelemente (zum Beispiel auf Kanten) reduziertes Bild sein. Der Vergleich des erfassten Bildes mit einem in einer Objektdatenbank gespeicherten Bild kann insbesondere dann vorteilhaft sein, wenn kein zu einem zurückliegenden Zeitpunkt erfasstes Bild vorliegt oder dieses vorher erfasste Bild für einen Vergleich nicht geeignet ist. Es kann auch sinnvoll sein, eine Mehrzahl von in der Objektdatenbank gespeicherten Bildern unterschiedlicher Objekte mit dem erfassten Bild zu vergleichen um dadurch zunächst das Zielobjekt zu identifizieren.

## VORTEILE

Da das vom Zielobjekt zur Bilderfassungseinrichtung zurücklaufende Licht dieselbe turbulente Atmosphäre wie der Hochenergielaserstrahl (zumindest im Umkreis des Friedparameters $r_0$) erfährt, kann das durch das vom Zielobjekt zum Hochenergiestrahler zurücklaufende Licht auf der Bilderfassungseinrichtung erzeugte Bild als Indikator für die von der Turbulenz erzeugten Störungen des vom Hochenergielaserstrahls erzeugten Strahlungsflecks auf dem Zielobjekt herangezogen werden. Das Abbild des Zielobjekts auf der Bilderfassungseinrichtung erfährt also in der Nähe des Hochenergielaserspots (also des Strahlungsflecks) ähnliche turbulente Störungen wie der Strahlungsfleck selber. Das erfindungsgemäße Verfahren ermöglicht folglich eine Turbulenzschätzung ohne eine apparativ aufwändige Wellenfrontmessung durchführen zu müssen.

Die Turbulenzschätzung und die daraufhin zumindest teilweise durchgeführte Kompensation der Turbulenzauswirkungen auf den Hochenergielaserstrahl und den von ihm auf dem Zielobjekt gebildeten Strahlungsfleck erfolgen auf Grundlage der konsekutiv von der Bilderfassungseinrichtung aufgenommenen Bilder, vorzugsweise Hochgeschwindigkeitskamerabilder, des Zielobjekts. Die Unterschiede, die sich durch unterschiedliche Wellenlängen des Hochenergielaserstrahls und des zurücklaufenden Lichts ergeben, sind hierbei nicht signifikant.

Durch das iterative Bildverarbeitungsverfahren (beispielsweise Warping-Verfahren) ist eine hohe Robustheit gegenüber Änderungen der Oberflächenintensitäten auf dem Zielobjekt sowie gegen eine Verzerrung der Form des Zielobjekts aufgrund von Turbulenzeinflüssen erzielbar. Somit werden zwar die Nachteile klassischer Bildverarbeitungsmethoden vermieden, jedoch geschieht dies zum Preis einer bestimmten Rechenzeit, welche sich in einem Regelkreis als Totzeit bemerkbar macht und Schleppfehler zur Folge haben kann. Dieser Nachteil wird durch eine Vorsteuerung über die Filtereinrichtung vermieden. Gleichzeitig können höherfrequente Störanteile in den ermittelten Ablagen erhalten bleiben, so dass der Feintracking-Regler auf diese reagieren kann. Dies ist für eine Turbulenzkompensation unerlässlich.

Durch die Anpassung des Feintracking-Reglers an die augenblickliche Totzeit kann eine weitere Verbesserung der Störunterdrückung erzielt werden. Die Totzeit kann bei Verwendung des Warping-Verfahrens z.B. aufgrund unterschiedlicher Template-Größen schwanken. Auf der Basis von der Bildverarbeitungseinrichtung übertragenen Zeitstempeln wird in einer bevorzugten Ausführungsform des Verfahrens die aktuelle Totzeit im Regler berechnet und die Reglerparameter werden online an diese Totzeit angepasst.

In einer anderen vorteilhaften Weiterbildung des erfindungsgemäßen Verfahrens wird aufgrund einer Rückführung der Filterergebnisse aus der Filtereinrichtung zurück in die Bildverarbeitungseinrichtung deren Robustheit gesteigert und die Anzahl an Iterationen und somit die Totzeit werden minimiert.

Des Weiteren erlaubt es das Filter, auch einen temporär durch Verdeckung nicht mehr sichtbaren Zielpunkt weiter zu verfolgen und nach Ende der Verdeckungsphase eine unmittelbare Wiederaufschaltung durchzuführen.

Die Kernidee der Erfindung besteht somit darin, die zeitliche Veränderung des Abbildes des vom Beleuchtungsstrahl beleuchteten Zielobjekts oder Teils des Zielobjekts, der möglichst an demselben Ort auf dem Zielobjekt liegt, an dem der Hochenergielaser-Strahlungsfleck liegt, oder zumindest in dessen unmittelbarer Umgebung, auf der Bilderfassungseinrichtung als Messgröße oder Indikator für die Veränderung des auf dem Zielobjekt gebildeten Hochenergielaser-Strahlungsflecks selbst heranzuziehen und durch die erfindungsgemäße Regelung eine Echtzeitkorrektur der optischen Fehler vorzunehmen.

Es erfolgt somit durch Anwendung des erfindungsgemäßen Verfahrens eine Wirkleistungserhöhung am Ort des Strahlungsflecks auf dem Zielobjekt durch Kompensation der Turbulenzeffekte ohne das Erfordernis eines großen apparativen Aufwands.

Die Berechnung der Bildverarbeitung benötigt eine gewisse Zeit, weshalb diese beispielsweise nur alle 5 ms (5-Millisekunden-Intervall) ausgeführt wird. Dies führt zu einer "Hinterherlaufen" des Reglers hinter dem Sollpunkt auf dem Ziel (so genannter Schleppfehler). Das Filter wiederum prädiziert in der Zwischenzeit und kann so beispielsweise alle 1 ms (1-Millisekunden-Intervall) aufgerufen werden. Die Filterung wird somit viel öfter (beispielsweise 5-mal so häufig) durchgeführt als die Regelung). Niederfrequentere Störanteile können so kompensiert werden.

In jedem Zeitschritt wird für jede Achse (x, y) der um zwei Achsen schwenkbaren optischen Korrektureinrichtung ein Korrektursignal, beispielsweise in Form eines elektrischen Spannungssignals ($u_x$, $u_y$) zur Beaufschlagung der optischen Korrektureinrichtung, erzeugt. Dieses Korrektursignal wird gebildet als Summe des entsprechenden Korrektursignals zu einem vorhergehenden Zeitpunkt (t − 1) und einem vom Filter ermittelten jeweiligen Differenz-Korrektursignal ($\Delta u_{x\,Filter}$, $\Delta u_{y\,Filter}$). Der Regler bildet ein gesondertes Differenz-Korrektursignal ($\Delta u_{x\,Regler}$, $\Delta u_{y\,Regler}$). Im Falle von Spannungssignalen gilt somit Folgendes:

$$u_x = u_{x\,(t-1)} + \Delta u_{x\,Filter} + \Delta u_{x\,Regler}$$

$$u_y = u_{y\,(t-1)} + \Delta u_{y\,Filter} + \Delta u_{y\,Regler}$$

Diese Summation wird zu jedem Zeitschritt ausgeführt. Da das Filter höherfrequent aufgerufen wird als der Regler, erfolgt diese Summation (und die Weiterleitung des Korrektursignals an die optische Korrektureinrichtung) im Filtertakt, zum Beispiel für den Filter alle 1 ms und für den Regler alle 5 ms.

Wurde keine Berechnung des Reglers durchgeführt, da kein neues Bildvergleichsergebnis vorlag, wird für das jeweilige $\Delta u_{Regler}$ der Wert Null verwendet:

$$\Delta u_{x\,Regler} = 0$$

$$\Delta u_{y\,Regler} = 0.$$

Zum Durchführen des Bildvergleichs ist jedes Bild mit einem Zeitstempel versehen, der es ermöglicht, die erfassten Bilder zeitlich einzuordnen und so jeder Messung den entsprechenden Zeitstempel zuzuordnen, so dass feststeht, für welchen Zeitpunkt der Bildaufnahme das Ergebnis der Bildverarbeitung gilt. Das Bildalter wird dabei beim Einlesen des Bildes über die Bildverarbeitung weitergereicht. Damit kann zugeordnet werden, zu welchem Bildindex das Bildverarbeitungsergebnis gehört

Weitere bevorzugte und vorteilhafte Weiterbildungsmerkmale des erfindungsgemäßen Verfahrens sind Gegenstand der Unteransprüche 2 bis 9.

Der auf die Vorrichtung gerichtete Teil der Aufgabe wird gelöst durch eine Vorrichtung mit den Merkmalen des Anspruchs 10.

Diese erfindungsgemäße Vorrichtung zur lokalen Stabilisierung eines Strahlungsflecks auf einem entfernten Zielobjekt gemäß dem erfindungsgemäßen Verfahren zeichnet sich aus durch eine Beleuchtungseinrichtung zur Aussendung eines Beleuchtungsstrahls auf ein Zielobjekt einen Hochenergielaser zur Aussendung eines Hochenergielaserstrahls auf das Zielobjekt, eine optische Korrektureinrichtung, die im optischen Pfad des Hochenergielaserstrahls vorgesehen ist und die von einer Regeleinrichtung ansteuerbar ist, eine Strahlungs-Auskoppelungseinrichtung, die im optischen Pfad des Hochenergielaserstrahls vorgesehen ist und die ausgebildet ist, um eine als Reflexion des Beleuchtungsstrahls empfangene Strahlung aus diesem optischen Pfad auszukoppeln und auf eine Bilderfassungseinrichtung zu leiten, und eine Bildverarbeitungseinrichtung, die zur Übertragung eines Bildsignals von der Bilderfassungseinrichtung mit dieser verbunden ist und die mit der Regeleinrichtung versehen ist, welche zur Erzeugung eines Korrektursignals ausgestaltet und zur Übertragung des Korrektursignals mit einer Steuerungseinrichtung für die optische Korrektureinrichtung verbunden ist. Diese optische Korrektureinrichtung beinhaltet eine Parallelschaltung aus dem Feintracking-Regler und einer Filtereinrichtung, welche jeweils Anteile am Korrektursignal für die optische Korrektureinrichtung liefern.

Diese Vorrichtung ermöglicht es, ohne größeren apparativen Aufwand wie er beispielsweise bei der Verwendung eines Wellenfrontsensors erforderlich wäre, die künftigen Turbulenzeinflüsse auf den Hochenergielaserstrahl vorab zu schätzen und zu kompensieren.

Insgesamt erhält man den Vorteil der Maximierung der Laserenergie im auf dem Zielobjekt gebildeten Strahlungsfleck und damit eine deutliche Reduzierung der Bestrahlzeit ohne Verwendung eines Wellenfrontsensors oder Guidestars.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

## KURZE BESCHREIBUNG DER ZEICHNUNGEN

Es zeigt:

Fig. 1 einen schematischen Aufbau einer erfindungsgemäßen Vorrichtung zur lokalen Stabilisierung eines Strahlungsflecks auf einem entfernten Zielobjekt, und

Fig. 2 ein Blockschaltbild eines Feintracking-Regelkreises.

## DARSTELLUNG VON BEVORZUGTEN AUSFÜHRUNGSBEISPIELEN

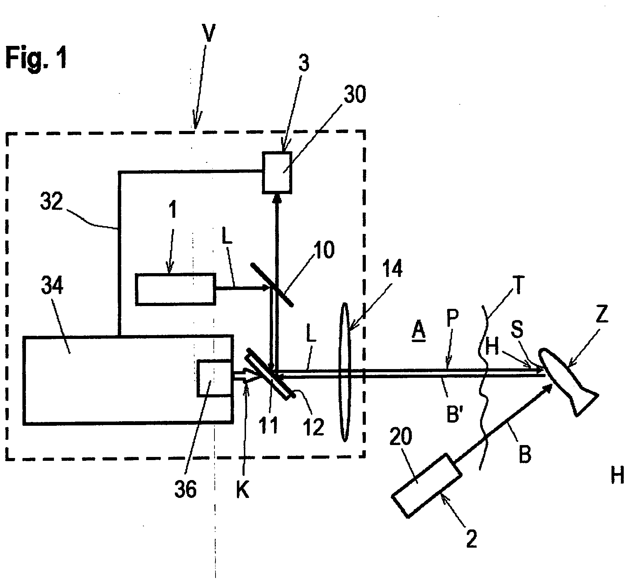

In Fig. 1 ist eine erfindungsgemäße Vorrichtung zur lokalen Stabilisierung eines Strahlungsflecks auf einem entfernten Zielobjekt schematisch dargestellt. Diese Vorrichtung weist einen Hochenergiestrahler 1 auf, der einen Hochenergielaserstrahl L aussendet. Dieser Hochenergielaserstrahl L trifft auf einen ersten Umlenkspiegel 10 und wird von dort auf einen zweiten Umlenkspiegel 12 weitergeleitet. Der erste Umlenkspiegel 10 ist als dichroitischer Spiegel ausgebildet, um die Strahlungsleistung des Hochenergielaserstrahls von einem auf demselben optischen Pfad empfangenen Bild zu entkoppeln. Der zweite Spiegel 12 ist ein Tip/Tilt-Spiegel, dessen Winkel variabel ist und von einer Regeleinrichtung kommandiert wird.

Der am zweiten Umlenkspiegel reflektierte Hochenergielaserstrahl L tritt dann durch eine beispielsweise als Teleskop ausgebildete Fokussiereinrichtung 14 hindurch und trifft auf die Außenhaut des weit entfernt gelegenen und/oder sich bewegenden Zielobjekts Z, das im gezeigten Beispiel von einem Flugkörper gebildet ist. Der Hochenergielaserstrahl L erzeugt so auf der Außenhaut des Zielobjekts Z einen Strahlungsfleck S. An diesem Strahlungsfleck S wird durch Einwirkung des Hochenergielaserstrahls L die Außenhaut des Zielobjekts Z derart erwärmt, dass die Struktur an dieser Stelle geschwächt und das Zielobjekt Z dadurch zerstört oder geschädigt wird. Ein typischer Anwendungsfall ist die Bekämpfung von Flugkörper-Waffen.

Der Hochenergielaserstrahl L durchläuft auf seinem Weg von der Vorrichtung V zum Zielobjekt Z die Atmosphäre A, in der Turbulenzen T auftreten, die in Fig. 1 schematisch als Wellenlinie dargestellt sind. Diese Turbulenzen bewirken, dass der Strahlungsfleck S auf dem Zielobjekt Z nicht ortsfest ist, sondern geringfügig bezüglich des von einer Zieleinrichtung anvisierten Haltepunkts H auf dem Zielobjekt Z in Ablage gerät. Das hat zur Folge, dass die lokal an der Außenhaut des Zielobjekts Z aufgebrachte Strahlungsenergie während der Bestrahlung nicht konstant bleibt, wodurch die Bestrahlungswirkung suboptimal ist. Die erforderliche Temperatur auf der Außenhaut des Zielobjekts Z, um die Außenhaut zu erweichen oder aufzuschmelzen, wird daher nur nach längerer Bestrahlungszeit und/oder nur unter Einsatz einer höheren Strahlungsenergie erreicht. Um dieses Ziel auch bei geringerer Strahlungsenergie und kürzerer Bestrahlungszeit zu erreichen, gilt es, den Strahlungsfleck S auf der Außenhaut des Zielobjekts Z lokal zu stabilisieren. Neben den üblichen Verfahren zur Zielverfolgung, die den Strahlungsfleck S auch bei einem bewegten Zielobjekt Z im wesentlichen punktgenau nachführen, ist das Problem der turbulenzbedingten Zielpunktablage des Hochenergielaserstrahls L zu lösen.

Dazu wird das Zielobjekt Z aus im Wesentlichen ebenso großer Entfernung wie die Entfernung zwischen der Vorrichtung V und dem Zielobjekt Z mittels einer Beleuchtungseinrichtung 2, die beispielsweise von einem Beleuchtungslaser 20 gebildet ist, beleuchtet. Der vom Beleuchtungslaser 20 ausgehende Beleuchtungsstrahl B weist üblicherweise eine vom Hochenergielaserstrahl L abweichende Wellenlänge auf. Der Beleuchtungslaser 20 ist divergent und beleuchtet das gesamte Zielobjekt oder zumindest ausgedehnte Bereiche des Zielobjekts Z.

Der Beleuchtungsstrahl B legt von der Beleuchtungseinrichtung 2 zum Ziel Z ebenfalls eine große Entfernung zurück und trifft auf das Zielobjekt Z und zwar ebenfalls auf die Außenhaut zumindest im Bereich des Strahlungsflecks S. Von dort wird die an der Außenhaut des Zielobjekts Z reflektierte Beleuchtungsstrahlung B' auf demselben optischen Pfad P zur Vorrichtung V geleitet, den der Hochenergielaserstrahl L von der Vorrichtung V zum Ziel Z nimmt. Das bedeutet, dass der reflektierte Beleuchtungsstrahl B' ebenfalls durch die Atmosphäre A und deren Turbulenzen T hindurch läuft und daher dieselben optischen Abweichungen erfährt, wie der zum selben Zeitpunkt durch die Turbulenzen T hindurchtretende Hochenergielaserstrahl L.

Der reflektierte Beleuchtungsstrahl B' tritt vom Zielobjekt Z kommend durch die Fokussiereinrichtung 14 hindurch und trifft auf den zweiten Umlenkspiegel 12, von dem er in Richtung auf den ersten Umlenkspiegel 10 abgelenkt wird.

Dieser erste Umlenkspiegel 10 ist für die Wellenlänge des Beleuchtungsstrahls B durchlässig, sodass er eine Strahlungs-Auskoppelungseinrichtung bildet, die den vom Zielobjekt Z reflektierten Beleuchtungsstrahl B' nicht ablenkt, sondern hindurchläßt. Der durch den ersten Umlenkspiegel 10 hindurchtretende reflektierte Beleuchtungsstrahl B' trifft dann auf eine Bilderfassungseinrichtung 3, die beispielsweise von einer Hochgeschwindigkeitskamera 30 gebildet ist. Die Bilderfassungseinrichtung 3 erfasst ein Abbild eines Teilbereichs des Zielobjekts Z oder sogar das gesamte Zielobjekt Z.

Das in der Bilderfassungseinrichtung 3 gewonnene Bildsignal wird über eine Signalleitung 32 zu einer Bildverarbeitungseinrichtung 34 geleitet, die das vom Bildsignal repräsentierte Bild analysiert und mit einem vorher erzeugten Bild vergleicht. Dieses vorher erzeugte Bild kann ein zu einem vorherigen oder früheren Zeitpunkt erfasstes oder synthetisch erzeugtes Bild sein. Aus einer Folge derartiger Vergleiche von hintereinander erzeugten oder von der Bilderfassungseinrichtung 3 erfassten Bildern des vom Beleuchtungsstrahl B auf der Außenhaut des Zielobjekts Z beleuchteten Bereichs, der über die reflektierte Beleuchtungsstrahlung B' wahrgenommen wird, kann die Bildverarbeitungseinrichtung 34 eine Prognose erstellen, welchen optischen Einflüssen der zu diesem Zeitpunkt ausgestrahlte Hochenergielaserstrahl L auf seinem Weg durch die Atmosphäre A unterworfen sein wird. Aus dieser Prognose ermittelt die Bildverarbeitungseinrichtung ein Korrektursignal, welches von einer in der Bildverarbeitungseinrichtung 34 vorgesehenen oder mit dieser verbundenen Regeleinrichtung 36 - symbolisiert durch den offenen Pfeil K - als Steuersignal an eine Steuerungseinrichtung des als Tip/Tilt-Spiegel ausgebildeten zweiten Umlenkspiegels 12 gesandt wird.

Selbstverständlich ist es bei geringfügigen Zugeständnissen an die Genauigkeit auch möglich, das Korrektursignal direkt aus einem Vergleich der Bildsignale der letzten empfangenen Bilder des Beleuchtungspunktes zu ermitteln ohne dass eine Prognose erstellt und diese dann der Korrektur zugrundegelegt wird.

Der zweite Umlenkspiegel 12 bildet so eine optische Korrektureinrichtung und gleicht die auf dem Weg zwischen der Vorrichtung V und dem Zielobjekt Z erwarteten optischen Einflüsse, die im Wesentlichen durch die Turbulenzen T verursacht werden, aus. Auf diese Weise ist ein Fein-Nachführ-Regelkreis gebildet, der die schädlichen Einwirkungen der Turbulenzen T auf den Hochenergielaserstrahl L (und natürlich auch auf den reflektierten Beleuchtungsstrahl B') kompensiert, sodass der vom Laserstrahl L gebildete Strahlungsfleck S auf der Außenhaut des Zielobjekts Z nahezu ortskonstant bleibt.

Bei der in Fig. 1 dargestellten Vorrichtung wird in demselben optischen Kanal oder auf demselben optischen Pfad, den der Hochenergielaser durchläuft, vom Ziel zurückgeworfenes Licht in einer Hochgeschwindigkeitskamera aufgenommen und ausgewertet. Auf dessen Basis wird eine Korrektur des Hochenergie-Laserstrahls mit Hilfe eines zum Beispiel als Piezospiegel ausgebildeten Tip/Tilt-Spiegels als optische Korrektureinrichtung durchgeführt. Obwohl das Zielobjekt im gezeigten Beispiel mittels eines Beleuchtungslasers beleuchtet wird, sind jedoch auch andere Beleuchtungsformen bis hin zur Auswertung der Rückstrahlung aufgrund der Sonneneinstrahlung nutzbar.

Kernpunkt des als Beispiel gezeigten und beschriebenen erfindungsgemäßen Verfahrens ist der Abgleich eines sogenannten Template-Bildes eines Objektes (des Zielobjekts oder eines Teils des Zielobjekts) mit dem augenblicklich von der Bilderfassungseinrichtung 2 erfassten Bild (im Folgenden als Feintracking-Bild bezeichnet). Ziel ist es, die Parameter einer Transformation zu bestimmen, die das Template-Bild optimal im Sinne eines bestimmten Gütemaßes auf das augenblickliche Feintracking-Bild abbildet. Hierzu kann beispielsweise die minimale quadratische Fehlersumme der Pixelabweichungen verwendet werden. An dieser Stelle ist es auch möglich, den Einfluss bestimmter Parameter der Transformation in dem Fehlermaß unterschiedlich bzw. bestimmte Pixelabweichungen stärker oder schwächer zu gewichten. Auch eine hierarchische Optimierung, in welcher die Komponenten einer Transformationen (z.B. Rotation, Translation) nacheinander optimiert werden, ist denkbar. Die Transformation selbst wird dabei als "Warping" bezeichnet und die Parameter der Transformation werden als Warping-Parameter bezeichnet.

Die Transformation kann verschiedene Freiheitsgrade zulassen: In der Regel werden Rotation, Translation, Streckung bzw. Stauchung und Scherung des Template-Bildes zugelassen. In dem Fall müssen sechs Warping-Parameter bestimmt werden. Aber auch projektive oder andere Transformationen sind denkbar. In diesem Fall kann die Anzahl der Warping-Parameter variieren. Für die Anwendung hat sich jedoch der Weg einer Reduktion der Warping-Parameter als nützlich erwiesen. Je nach Begegnungsgeometrie und Zieltrajektorie treten bestimmte Effekte wie Scherung oder Stauchung nicht auf, so dass die Verwendung von weniger Warping-Parametern (beispielsweise drei oder fünf) nützlich sein kann.

Ist der Haltepunkt (der anvisierte Punkt auf dem Zielobjekt Z, den der Hochenergielaserstrahl L treffen soll) im Template-Bild definiert, so kann er unter Verwendung der ermittelten Transformationsvorschrift in das aktuelle Bild transformiert werden und es kann direkt die Ablage ermittelt werden, auf deren Basis die Regeleinrichtung 36 das Korrektursignal berechnet.

Vorzugsweise werden die Warping-Parameter auch zur Berechnung von Korrektursignalen zur Ansteuerung eines verformbaren Spiegels zur Kompensation höherer Moden (korrespondierend mit einer Verformung des vom Hochenergielaser gebildeten Strahlungsflecks) verwendet.

Das Template-Bild selbst kann ein generisches Bild des Zielobjekts Z sein, welches vorgefertigt ist und in einem Speicher der Bildverarbeitungseinrichtung 34 abgespeichert bereitgestellt wird. Alternativ kann das Template-Bild ein anhand einer anfänglich (vor Einleiten der Bekämpfung durch Aktivierung des Hochenergielasers) von der Bilderfassungseinrichtung 3 aufgenommenen Bildsequenz generiertes Bild sein. Schließlich kann das Template-Bild alternativ auch durch eine von einem Bediener vorgenommene Auswahl eines Ausschnitts des Feintracking-Bilds gebildet werden. Welche dieser alternativen Methoden eingesetzt wird, hängt beispielsweise vom Zielobjekt-Typ ab. Bei sich schnell bewegenden Zielobjekten muss die Wahl automatisch erfolgen, bei langsamen Zielobjekten ist die Vorgabe durch den Bediener sinnvoll. Gleiches gilt für die Wahl des Haltepunkts, der automatisiert oder durch den Bediener vorgegeben werden kann.

Im Zuge des Bekämpfungsvorgangs kann sich, beispielsweise durch ein Flugmanöver des Zielobjekts, die Ansicht des Objektes grundlegend ändern, so dass das zugrunde liegende Template-Bild der Situation nicht mehr gerecht wird. Um diesem Effekt zu begegnen, kann das Template-Bild mit Hilfe von Information aus dem Feintracking-Bild modifiziert werden, das Template ist dann lernend ausgelegt. Der Anteil an Information, der aus dem aktuellen Feintracking-Bild zur Modifikation des Templates herangezogen wird, kann dabei begrenzt werden ("Lernrate").

Da das Template-Bild im Allgemeinen weniger Pixel beinhaltet als das von der Bilderfassungseinrichtung erfasste Bild und der Berechnungsaufwand und somit auch die benötigte Rechenzeit mit der Anzahl der Pixel ansteigt, wird vorzugsweise das Template "gewarpt", das heißt einer Transformation unterworfen. Da das Warping im Zuge der Optimierung in jedem Iterationsschritt erfolgen muss, reduziert dies den Rechenaufwand deutlich. Prinzipiell ist jedoch auch der umgekehrte Weg denkbar. Zusätzlich kann Aufwand eingespart werden, indem die Pixelauflösung des Template-Bildes reduziert wird.

Unter dem Aspekt der Korrektur von Turbulenzeinflüssen ist ein räumlich begrenzter Bereich (charakterisiert durch den Fried-Radius $r_0$) um den Haltepunkt auf dem Zielobjekt entscheidend. Ist das Zielobjekt groß im Vergleich zu diesem Bereich, kann es sinnvoll sein, ein sogenanntes Sub-Template zu verwenden, welches ausschließlich diesen Bereich des Zielobjekts beinhaltet. In diesem Fall wird das Template-Bild zur Ermittlung einer Grobausrichtung verwendet (primär zur Korrektur der Bewegung des Ziels). Anschließend wird und unter Verwendung des Sub-Templates noch eine Detailausrichtung (primär zur Korrektur der Bewegung aufgrund von Turbulenzen) ermittelt. Die Wahl des Sub-Templates kann, wie schon die Template-Wahl, wiederum auf verschiedene Weise erfolgen. Besonders sinnvoll erscheint die automatisierte Wahl eines Bereichs um den vorgegebenen Haltepunkt, dessen Größe abhängig von $r_0$ gewählt wird.

Die beschriebene Vorrichtung fertigt Aufnahmen des Zielobjekts an, auf deren Grundlage mit Hilfe der Warping-Verfahren ein Haltepunkt bestimmt wird. Zeitgleich wird in demselben optischen Kanal oder auf demselben optischen Pfad, durch den das Licht für die Aufnahmen empfangen wird, ein Hochenergielaserfleck auf das Ziel gestrahlt.

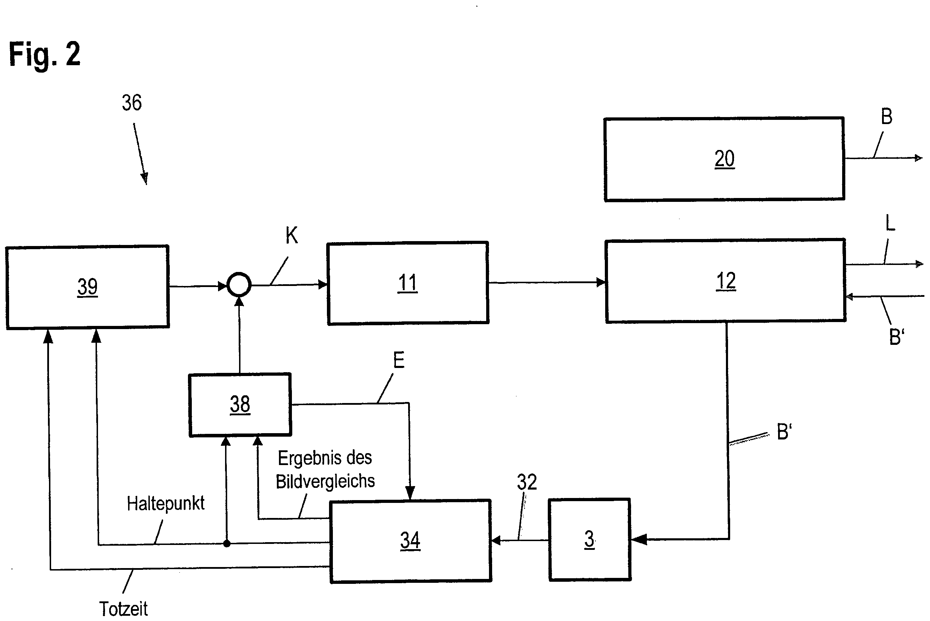

Die Signalverarbeitung in einem mit der Regeleinrichtung 36 in der Vorrichtung gebildeten Regelkreises ist als Blockschaltbild in Fig. 2 dargestellt. Die Regeleinrichtung ist der Bildverarbeitungseinrichtung 34 nachgeschaltet und weist eine Filtereinrichtung 38 und einen Feintracking-Regler 39 als Reglereinrichtung auf. Die Filtereinrichtung 38 und der Feintracking-Regler sind, wie in Fig. 2 zu erkennen ist, nicht in Serie, sondern parallel geschaltet.

Sowohl die Filtereinrichtung 38 als auch der Feintracking-Regler 39 erhalten über entsprechende Signalleitungen Signale von der Bildverarbeitungseinrichtung 34. Ein Filterergebnis-Signal E wird von der Filtereinrichtung 38 zurück zur Bildverarbeitungseinrichtung 34 geleitet. Die Ausgangssignale der Filtereinrichtung 38 und des Feintracking-Reglers 39 werden als Korrektursignale K zur Steuerungseinrichtung 11 des zweiten Umlenkspiegels 12 geleitet. Die Arbeitsweise der Regeleinrichtung 36 wird nachstehend beschrieben.

Nach der Bilderfassung durch die Bilderfassungseinrichtung 3 wird in der Bildverarbeitungseinrichtung 34 mit Hilfe eines geeigneten Bildverarbeitungsverfahrens der Haltepunkt H im augenblicklichen Feintracking-Bild bestimmt. Hierzu erscheinen vor allem iterative Verfahren geeignet, welche unter Verwendung von Template-Bildern eine affine Transformation berechnen (zum Beispiel die oben beschriebenen Warping-Verfahren).

Die Ergebnisse der Bildverarbeitung, nämlich die Haltepunkt-Position im aktuellen Feintracking-Bild sowie weitere Parameter zum Beispiel einer affinen Transformation und, bei Verwendung von Warping Verfahren, die Warping Parameter, bilden die Eingangsgrößen sowohl der Filtereinrichtung 38 als auch des Feintracking-Reglers 39. Mit Hilfe eines in der Filtereinrichtung vorgesehenen Filters wird die Bildinformation mit der Filtereinrichtung 38 zugeführter Bewegungsinformation fusioniert. Bei dieser Fusion fließen als Bewegungsinformation zum Beispiel Informationen über das Zielobjekt ein, die durch Messungen eines das Zielobjekt beobachtenden Radars gewonnen werden oder die als Ergebnisse einer (nicht gezeigten) Grobtracking-Bildverarbeitung gewonnen werden. Außerdem können abhängig vom Zielobjekt-Typ und vom Manöver, welches das Zielobjekt fliegt, verschiedene Filter parallel angewendet und berechnet werden und mit Hilfe einer geeigneten Strategie kann das auf die augenblickliche Situation optimal zugeschnittene Filter ausgewählt werden.

Das Filterergebnis wird dazu verwendet, den Piezospiegel entsprechend der geschätzten Zielbewegung vorzusteuern, um auf diese Weise Schleppfehler zu minimieren. Im (theoretischen) Idealfall, wenn das Filtermodell exakt zur Bewegung des Hochenergiespots auf dem Ziel passt, werden die Störungen so vollständig kompensiert, ohne dass der Regelalgorithmus aktiv wird.

Praktisch werden sich aufgrund von Modellierungsfehlern und von nicht modellierten Dynamiken dennoch Abweichungen ergeben. Diese Abweichungen zu unterdrücken ist Aufgabe des Feintracking-Reglers 39. Da die Filtereinrichtung 38 in der in Fig. 2 gezeigten Struktur parallel zum Feintracking-Regler 39 eingesetzt wird, kann der Regelalgorithmus weiterhin auf höherfrequente Anteile reagieren.

Neben der aktuellen Haltepunkt-Position im Bild erhält der Regelalgorithmus auch die Information über die durch das Bildverarbeitungsverfahren, wie zum Beispiel eine Bildintegration, eingebrachte Totzeit, so dass der Regelalgorithmus entsprechend adaptiert werden kann.

Das Filterergebnis wird zusätzlich dazu genutzt, die Berechnung der Bildverarbeitung zu stützen, indem eine geeignete Initialisierung der Bildverarbeitung stattfindet. Dies ist insbesondere bei iterativen Verfahren (beispielsweise bei Warping-Verfahren) von Vorteil. Die Robustheit gegenüber einem Zielverlust wird hierdurch erhöht und die Anzahl der notwendigen Iterationen des Bildverarbeitungsverfahrens wird minimiert.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:

| | |
|---|---|
| 1 | Hochenergiestrahler |
| 2 | Beleuchtungseinrichtung |
| 3 | Bilderfassungseinrichtung |
| 10 | erster Umlenkspiegel (Strahlungs-Auskoppelungseinrichtung) |
| 11 | Steuerungseinrichtung |
| 12 | zweiter Umlenkspiegel (optische Korrektureinrichtung) |
| 14 | Fokussiereinrichtung |
| 20 | Beleuchtungslaser |
| 30 | Hochgeschwindigkeitskamera |
| 32 | Signalleitung |
| 34 | Bildverarbeitungseinrichtung |
| 36 | Regeleinrichtung |
| 38 | Filtereinrichtung |
| 39 | Feintracking-Regler |
| A | Atmosphäre |
| B | Beleuchtungsstrahl |
| B' | reflektierte Beleuchtungsstrahlung |
| E | Filterergebnis |
| H | Haltepunkt |
| K | Korrektursignal |
| L | Hochenergielaserstrahl |
| P | optischer Pfad |
| S | Strahlungsfleck |
| T | Turbulenzen |
| V | Vorrichtung |
| Z | Zielobjekt |

### Patentansprüche

1. Verfahren zur lokalen Stabilisierung eines Strahlungsflecks (S) auf einem entfernten Zielobjekt (Z), wobei der Strahlungsfleck (S) von einem Hochenergielaserstrahl (L) gebildet wird, der von einem Hochenergiestrahler (1) auf das Zielobjekt (Z) gerichtet wird, und wobei das Zielobjekt (Z) von einem Beleuchtungsstrahl (B) beleuchtet wird, der von einer Beleuchtungseinrichtung (2) auf das Zielobjekt (Z) gerichtet wird;

    - wobei eine von dem vom Beleuchtungsstrahl (B) beleuchteten Zielobjekt (Z) reflektierte Strahlung (B') nach dem Durchgang durch einen optischen Pfad (P), durch welchen auch der Hochenergielaserstrahl (L) läuft, von einer Bilderfassungseinrichtung (3) empfangen wird;
- wobei das von der Bilderfassungseinrichtung (3) erfasste Bild des beleuchteten Zielobjekts (Z) oder eines Teils des beleuchteten Zielobjekts von einer Bildverarbeitungseinrichtung (34) analysiert und mit zumindest einem zu einem zurückliegenden Zeitpunkt erzeugten Bild des beleuchteten Zielobjekts (Z) oder eines Teils des beleuchteten Zielobjekts oder mit einem in einer Objektdatenbank gespeicherten Bild verglichen wird;
- wobei das Ergebnis des in der Bildverarbeitungseinrichtung (34) durchgeführten Vergleichs einer Filtereinrichtung (38) und parallel dazu einem Feintracking-Regler (39) zugeführt wird;
- wobei die Filtereinrichtung (38) unter Verwendung eines Bewegungsmodells für den Strahlungsfleck (S) auf dem Zielobjekt (Z) und des Ergebnisses des in der Bildverarbeitungseinrichtung (34) durchgeführten Vergleichs die Ablage des Strahlungsflecks (S) vom Haltepunkt im nächsten Zeitabschnitt prädiziert und ein Filter-Korrektursignal erzeugt, wobei eine im Bewegungsmodell berücksichtigte Bewegung sich aus Anteilen einer Bewegung des Zielobjekts (Z) und Turbulenzeinflüssen zusammensetzt;
- wobei der Feintracking-Regler (39) unter Verwendung des Ergebnisses des in der Bildverarbeitungseinrichtung (34) durchgeführten Vergleichs verbleibende Restfehler kompensiert und ein Regler-Korrektursignal erzeugt;
- wobei aus dem Filter-Korrektursignal und dem Regler-Korrektursignal ein Korrektursignal (K) gebildet wird; und
- wobei eine in dem vom Hochenergielaserstrahl (L) und von der reflektierten Strahlung (B') gemeinsam durchlaufenden optischen Pfad (P) angeordnete optische Korrektureinrichtung (12) mit dem Korrektursignal (K) beaufschlagt wird.

2. Verfahren nach Anspruch 1,
   **dadurch gekennzeichnet,**
   **dass** das Ergebnis des in der Bildverarbeitungseinrichtung (34) durchgeführten Vergleichs eine ermittelte Ablage des Strahlungsflecks vom Haltepunkt und/oder Warping-Parameter mit Zeitstempel umfasst.

3. Verfahren nach Anspruch 1 oder 2,
   **dadurch gekennzeichnet,**
   **dass** das Korrektursignal (K) durch Addition des Filter-Korrektursignals und des Regler-Korrektursignals ermittelt wird.

4. Verfahren nach einem der vorhergehenden Ansprüche,
   **dadurch gekennzeichnet,**

**dass** der Aufruf des Filters und damit die Ermittlung eines Filter-Korrektursignals in einem höheren Takt erfolgen als der Takt der Bildverarbeitung und so Schleppfehler aufgrund von Totzeiten gemindert werden.

5. Verfahren nach einem der vorhergehenden Ansprüche,
   **dadurch gekennzeichnet,**
   **dass** neben dem Ergebnis der Bildverarbeitung auch Messwerte einer Radarvermessung des Zielobjekts und/oder Messwerte einer Grobtracking-Bildverarbeitung als zusätzliche Messwerte in das Filter einfließen.

6. Verfahren nach einem der vorhergehenden Ansprüche,
   **dadurch gekennzeichnet,**
   **dass** der Regelalgorithmus unter Verwendung des Zeitstempels an die augenblickliche Totzeit angepasst wird.

7. Verfahren nach einem der vorhergehenden Ansprüche,
   **dadurch gekennzeichnet,**
   **dass** der Feintracking-Regler (39) im Takt der Bildverarbeitung aufgerufen wird und dass die Filtereinrichtung (38) mit einem Takt aufgerufen wird, der größer ist als der Takt der Bildverarbeitung.

8. Vorrichtung zur lokalen Stabilisierung eines Strahlungsflecks (S) auf einem entfernten Zielobjekt (Z) gemäß einem Verfahren nach einem der vorhergehenden Ansprüche, aufweisend

   - eine Beleuchtungseinrichtung (2) zur Aussendung eines Beleuchtungsstrahls (B) auf ein Zielobjekt (Z);
   - einen Hochenergielaser (1) zur Aussendung eines Hochenergielaserstrahls (L) auf das Zielobjekt (Z);
   - eine optische Korrektureinrichtung (12), die im optischen Pfad (P) des Hochenergielaserstrahls (L) vorgesehen ist und die von einer Regeleinrichtung (36) ansteuerbar ist;
   - eine Strahlungs-Auskoppelungseinrichtung (10), die im optischen Pfad (P) des Hochenergielaserstrahls (L) vorgesehen ist und die ausgebildet ist, um eine als Reflexion des Beleuchtungsstrahls (B) empfangene Strahlung (B') aus diesem optischen Pfad (P) auszukoppeln und auf eine Bilderfassungseinrichtung (3) zu leiten; und
   - eine Bildverarbeitungseinrichtung (34), die zur Übertragung eines Bildsignals von der Bilderfassungseinrichtung (3) mit dieser verbunden ist und die mit der Regeleinrichtung (36) versehen ist, welche zur Erzeugung eines Korrektursignals ausgestaltet und zur Übertragung des Korrektursignals (K) mit einer Steuerungseinrichtung (11) für die optische Korrektureinrichtung (12) verbunden ist;

- wobei die Regeleinrichtung (36) eine Filtereinrichtung (38) und einen dazu parallel angeordneten Feintracking-Regler (39) aufweist;

- wobei die Filtereinrichtung (38) dazu ausgebildet ist, unter Verwendung eines Bewegungsmodells für den Strahlungsfleck (S) auf dem Zielobjekt (Z) und des Ergebnisses des in der Bildverarbeitungseinrichtung (34) durchgeführten Vergleichs die Ablage des Strahlungsflecks (S) vom Haltepunkt im nächsten Zeitabschnitt zu prädizieren, wobei eine im Bewegungsmodell berücksichtigte Bewegung sich aus Anteilen einer Bewegung des Zielobjekts (Z) und Turbulenzeinflüssen zusammensetzt; und

- wobei der Feintracking-Regler (39) dazu ausgebildet ist, unter Verwendung des Ergebnisses des in der Bildverarbeitungseinrichtung (34) durchgeführten Vergleichs verbleibende Restfehler zu kompensieren.

## Claims

1. Method for local stabilisation of a beam spot (S) on a remote target object (Z), the beam dot (S) being formed by a high-energy beam (L) which is directed onto the target object (Z) by a high-energy emitter (1), and the target object (Z) being illuminated by an illuminating beam (B) which is directed onto the target object (Z) by an illumination device (2);

- a beam (B'), reflected from the target object (Z) illuminated by the illuminating beam (B), being received by an image capture device (3) after passing through an optical path (P) through which the high-energy beam (L) also passes;
- the image, captured by the image capture device (3), of the illuminated target object (Z) or of part of the illuminated target object being analysed by an image processing device (34) and compared with at least one image, generated at a previous time, of the illuminated target object (Z) or of part of the illuminated target object or with an image stored in an object database;
- the result of the comparison made in the image processing device (34) being supplied to a filter device (38) and in parallel therewith a fine tracking regulator (39);
- the filter device (38) predicting the offset of the beam spot (S) from the holding point in the next time interval, using a movement model for the beam spot (S) on the target object (Z) and the result of the comparison made in the image processing device (34), and generating a filter correction signal, a movement taken into account in the movement model being composed of components of a movement of the target object (Z) and turbulence influences;

- the fine tracking regulator (39) compensating any remaining residual errors using the result of the comparison made in the image processing device (34), and generating a regulator correction signal;
- a correction signal (K) being formed from the filter correction signal and the regulator correction signal; and
- the correction signal (K) being applied to an optical correction device (12), which is arranged in the optical path (P) which is jointly passed through by the high energy laser beam (L) and by the reflected beam (B').

2. Method according to claim 1, **characterised in that** the result of the comparison made in the image processing device (34) comprises a determined offset of the beam spot from the holding point and/or warping parameter with a timestamp.

3. Method according to either claim 1 or claim 2, **characterised in that** the correction signal (K) is determined by adding the filter correction signal and the regulator correction signal.

4. Method according to any of the preceding claims, **characterised in that** the querying of the filter and thus the determination of a filter correction signal take place at a higher rate than the rate of the image processing, and thus lag errors due to delay times are reduced.

5. Method according to any of the preceding claims, **characterised in that**, as well as the result of the image processing, measurement values of a radar measurement of the target object and/or measurement values of a rough tracking image processing are inputted to the filter as additional measurement values.

6. Method according to any of the preceding claims, **characterised in that** the regulation algorithm is adapted to the current delay time using the timestamp.

7. Method according to any of the preceding claims **characterised in that** the fine tracking regulator (39) is queried at the rate of the image processing, and in that the filter device (38) is queried at a rate higher than the rate of the image processing.

8. Device for local stabilisation of a beam spot (S) on a remote target object (Z) by a method according to any of the preceding claims, comprising

- an illumination device (2) for emitting an illuminating beam (B) onto a target object (Z);
- a high-energy laser (1) for emitting a high-energy laser beam (L) onto the target object (Z);
- an optical correction device (12), which is provided in the optical path (P) of the high-energy laser beam (L) and which is actuable by a regulation device (36);
- a beam decoupling device (10), which is provided in the optical path (P) of the high-energy laser beam (L) and which is formed to decouple a beam (B'), received as a reflection of the illuminating beam (B), from this optical path (P) and to pass it to an image capture device (3); and
- an image processing device (34), which is connected to the image capture device (3) to transmit an image signal thereof and which is provided with the regulation device (36), which is configured to generate a correction signal and to transmit the correction signal (K) using a control device (11) for the optical correction device (12);
- the regulation device (36) having a filter device (38) and a fine tracking regulator (39) arranged in parallel therewith;
- the filter device (38) being formed to predict the offset of the beam spot (S) from the holding point in the next time interval, using a movement model for the beam spot (S) on the target object (Z) and the result of the comparison made in the image processing device (34), a movement taken into account in the movement model being composed of components of a movement of the target object (Z) and turbulence influences; and
- the fine tracking regulator (39) being formed to compensate any remaining residual errors using the result of the comparison made in the image processing device (34).

**Revendications**

1. Procédé de stabilisation locale d'une tache de rayonnement (S) sur un objet cible (Z) éloigné, dans lequel la tache de rayonnement (S) est créée par un rayon laser à haute énergie (L), lequel est dirigé depuis un émetteur haute énergie sur l'objet cible (Z), et dans lequel l'objet cible (Z) est illuminé par un faisceau d'éclairage (B), lequel est dirigé depuis un moyen d'éclairage (2) sur l'objet cible (Z),

- dans lequel un rayonnement (B') réfléchi par l'objet cible (Z) illuminé par le faisceau d'éclairage (B) est reçu par un moyen de capture d'image (3) après le passage à travers un chemin optique (P), lequel est également parcouru par le rayon laser à haute énergie (L) ;
- dans lequel l'image de l'objet cible (Z) illuminé ou d'une partie de l'objet cible illuminé capturée par le moyen de capture d'image (3) est analysée par un moyen de traitement d'image (34) et est comparée à au moins une image de l'objet cible (Z) illuminé ou d'une partie de l'objet cible illuminé produite à un instant précédent ou à une image enregistrée dans une banque de données d'objet ;
- dans lequel le résultat de la comparaison effectuée dans le moyen de traitement d'image (34) est conduit à un moyen de filtre (38) et parallèlement à un régulateur de poursuite précise (39) ;
- dans lequel le moyen de filtre (38) prédit le gisement de la tache de rayonnement (S) par rapport au point d'arrêt dans la période suivante en utilisant un modèle de mouvement pour la tache de rayonnement (S) sur l'objet cible (Z) et le résultat de la comparaison effectuée dans le moyen de traitement d'image (34) et produit un signal de correction de filtre, dans lequel un mouvement pris en compte dans le modèle de mouvement se compose de fractions d'un mouvement d'un objet cible (Z) et d'effets de turbulence ;
- dans lequel le régulateur de poursuite précise (39) compense les erreurs résiduelles restantes en utilisant le résultat de la comparaison effectuée dans le moyen de traitement d'image (34) et produit un signal de correction de régulateur ;
- dans lequel un signal de correction (K) est formé à partir du signal de correction de filtre et du signal de correction de régulateur ; et
- dans lequel un moyen correcteur optique (12) agencé dans le chemin optique (P) traversé conjointement par le rayon laser à haute énergie (L) et le rayonnement réfléchi (B') se voit appliquer le signal de correction (K) .

2. Procédé selon la revendication 1,
**caractérisé en ce que**
le résultat de la comparaison effectuée dans le moyen de traitement d'image (34) comprend un gisement déterminé de la tache de rayonnement par rapport au point d'arrêt et/ou des paramètres de distorsion avec estampille horaire.

3. Procédé selon la revendication 1 ou 2,
**caractérisé en ce que**
le signal de correction (K) est calculé par addition du signal de correction de filtre et du signal de correction de régulateur.

4. Procédé selon l'une des revendications précédentes,

**caractérisé en ce que**
l'appel du filtre et ainsi le calcul d'un signal de correction de filtre s'effectuent à une fréquence d'horloge supérieure à celle du traitement d'image et les erreurs de poursuite dues aux temps morts sont donc réduites.

5. Procédé selon l'une des revendications précédentes,
   **caractérisé en ce que**
   outre le résultat du traitement d'image, des valeurs de mesure d'une analyse radar de l'objet cible et/ou des valeurs de mesure d'un traitement d'image de poursuite grossière influent également dans le filtre comme valeurs de mesure supplémentaires.

6. Procédé selon l'une des revendications précédentes,
   **caractérisé en ce que**
   l'algorithme de régulation est adapté au temps mort momentané par utilisation de l'estampille horaire.

7. Procédé selon l'une des revendications précédentes,
   **caractérisé en ce que**
   le régulateur de poursuite précise (39) est appelé à la fréquence d'horloge du traitement d'image et **en ce que** le moyen de filtre (38) est appelé à une fréquence d'horloge supérieure à la fréquence d'horloge du traitement d'image.

8. Dispositif de stabilisation locale d'une tache de rayonnement (S) sur un objet cible (Z) éloigné conformément à un procédé selon l'une des revendications précédentes, comportant

   - un moyen d'éclairage (2) permettant d'émettre un faisceau d'éclairage (B) sur un objet cible (Z) ;
   - un laser à haute énergie (1) permettant d'émettre un faisceau laser à haute énergie (L) sur l'objet cible (Z) ;
   - un moyen de correction optique (12), lequel est prévu dans le chemin optique du faisceau laser à haute énergie (L) et peut être commandé par un moyen de régulation (36) ;
   - un moyen de découplage de rayonnement (10), lequel est prévu dans le chemin optique du faisceau laser à haute énergie (L) et est réalisé pour découpler de ce chemin optique (P) un rayonnement (B1) reçu comme réflexion du faisceau d'éclairage (B) et pour le guider sur un moyen de capture d'image (3) ; et
   - un moyen de traitement d'image (34), lequel est raccordé au moyen de capture d'image (3) pour la transmission d'un signal d'image de celui-ci et est prévu doté d'un moyen de régulation (36), lequel est configuré pour produire un signal de correction et est raccordé à un moyen de commande (11) pour le moyen de correction (12) pour la transmission du signal de correction (K) ;
   - dans lequel le moyen de régulation (36) comporte un moyen de filtre (38) et un régulateur de poursuite précise (39) agencé parallèlement à celui-ci ;
   - dans lequel le moyen de filtre (38) est réalisé de façon à prédire le gisement de la tache de rayonnement (S) par rapport au point d'arrêt dans la période suivante est réalisée de façon en utilisant un modèle de mouvement pour la tache de rayonnement (S) sur l'objet cible (Z) et le résultat de la comparaison effectuée dans le moyen de traitement d'image (34), dans lequel un mouvement pris en compte dans le modèle de mouvement se compose de fractions d'un mouvement d'un objet cible (Z) et d'effets de turbulence ; et
   - dans lequel le régulateur de poursuite précise (39) est réalisé de façon à compenser les erreurs résiduelles restantes en utilisant le résultat de la comparaison effectuée dans le moyen de traitement d'image (34).

Fig. 1

**Fig. 2**

EP 3 034 984 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7405834 B1
- US 2010282942 A1
- US 2012292481 A1
- US 2009097508 A1
- US 2011103410 A1

**In der Beschreibung aufgeführte Nicht-Patentliteratur**

- **FITZPATRICK et al.** Bayesian statistical approaches to tracking through turbulence. *American Control Conference,* 2004